# EUROPÄISCHE PATENTSCHRIFT

(11) **EP 1 027 553 B1**
(45) Veröffentlichungstag und Bekanntmachung des Hinweises auf die Patenterteilung: **27.02.2002**
(21) Anmeldenummer: 98954429.1
(22) Anmeldetag: 17.10.1998
(51) Int. Cl.: F16L 47/02

(54) **ANSCHWEISSBARE SCHELLE FÜR EIN AUS THERMISCH SCHWEISSFÄHIGEM MATERIAL BESTEHENDES LEITUNGSROHR**
WELDABLE CLAMP FOR A CONDUIT MADE OF THERMALLY WELDABLE MATERIAL
BRIDE DE FIXATION SOUDABLE POUR CONDUITE CONSTITUEE D'UN MATERIAU POUVANT ETRE SOUDE THERMIQUEMENT

(30) Priorität: 03.11.1997 DE 19748342
(43) Veröffentlichungstag der Anmeldung: 16.08.2000
(73) Patentinhaber: DA-Kunststoff GmbH, 42859 Remscheid (DE)
(72) Erfinder: HINTZEN, Werner, D-50765 Köln (DE)
(74) Vertreter: Mentzel, Norbert, Dipl.-Phys.
(86) Internationale Anmeldenummer: EP9806585
(87) Internationale Veröffentlichungsnummer: WO9923410

(56) Entgegenhaltungen:
- EP-A- 0 438 990
- DE-U- 29 616 864
- US-A- 2 690 193

## Beschreibung

Die Erfindung richtet sich auf eine Schelle der im Oberbegriff des Anspruches 1 angegebenen Art. Man verwendet derartige Schellen, um z.B. nachträglich an einem bereits verlegten, unter Mediendruck stehenden Leitungsrohr eine Abzweigleitung anzuschließen. Dazu verwendet man Schellen, die mindestens an einem ihrer um das Leitungsrohr herumgelegten zylinderförmigen Segmente einen Rohrabgang aufweisen. Dieser Rohrabgang dient zunächst zum Anbohren des Leitungsrohres, dann aber auch zur Medienführung an die an den Rohrabgang angeschlossene Abzweigleitung. In anderen Fällen, wo ein Leitungsrohr eine defekte Stelle aufweist, wird, zwecks Reparatur, eine Schelle aus Segmenten ohne Rohrabgang um das Leitungsrohr herumgelegt.

Bei der bekannten Schelle der im Oberbegriff von Anspruch 1 genannten Art (DE 296 16 864) sind die Laschen keilförmig ausgebildet und haben in ihrem Fußbereich eine größere Querschnittsdicke als im Kopfbereich. Derartige Laschen sind zwar stabil, doch gibt es im Gebrauchsfall, beim Erhitzen des schweißfähigen Materials durch die Heizmatte, Schweißprobleme. Ordnet man die Heizmatte nahe an der Lascheninnenfläche an, dann ist zwar die dortige Verbindung mit dem Leitungsrohr befriedigend, doch kommt es zwischen der Laschenaußenfläche und der Tascheninnenwand zu keiner ausreichenden Schweißverbindung.

Zur Verbindung einer schrumpfbaren Muffe zwischen den benachbarten Mantelrohren einer Rohrverbindung legt man eine bandförmige Heizmatte in den Spaltbereich zwischen dem Mantelrohr einerseits und der darüberschiebbaren Muffe andererseits (DE 37 20 577 A1), wo die Stoßenden am Bandende der Heizmatte stufenförmig zueinander versetzt sind und im Gebrauchsfall kammartig ineinandergreifen. Die Heizmatte ist ein separater Bauteil, der als loses Band ringförmig um das Mantelrohr gelegt wird und eine doppellagige Schweißverbindung erzeugt, nämlich einmal mit der Umfangsfläche des Mantelrohres und ferner mit der Innenfläche der aufgeschrumpften Muffe. Dichtungsprobleme einer aus mindestens zwei zylindrischen Segmenten zusammengesetzten Schelle treten hier nicht auf.

Bei einer Schelle anderer Art (EP 0 438 990 A) sind die beiden Segmente mit längsverlaufenden Flanschen versehen, die an ihren Berührungsflächen jeweils einen Zapfen mit zueinander unterschiedlichem Querschnittsprofil aufweisen. Diese Zapfen sollen vermutlich eine unerwünschte Wendeposition des einen Segments gegenüber dem anderen verhindern. Die Flansche der beiden Segmente werden von Gleitelementen mit konischem Profil zusammengedrückt. Das setzt eine bestimmte Orientierung der Segmente voraus. Die Flansche haben keine sie überragende Laschen und die Segmente keine Taschen für die Laschen. Deshalb kommt diesen Zapfen keine Schutzfunktion zu.

Der Erfindung liegt die Aufgabe zugrunde, eine Schelle der im Oberbegriff des Anspruches 1 genannten Art zu entwickeln, welche eine besonders hohe Mediendichtigkeit ihrer Schweißstellen mit einem geringen Bauaufwand und geringer Heizenergie erreicht. Dies wird erfindungsgemäß durch die im Kennzeichen des Anspruches 1 angeführten Maßnahmen erreicht, denen folgende besondere Bedeutung zukommt.

Durch die geringe Laschendicke gelangt im Gebrauchsfall die in den dort integrierten Lappen der Heizmatte erzeugte Wärme sowohl an die Innenfläche als auch an die Außenfläche der Lasche, wodurch dort so hohe Temperaturen entstehen, dass sich eine beidseitige Schweißverbindung der Laschen ergibt. Das gilt insbesondere, wenn man die Laschendicke über die ganze Laschendicke im wesentlichen gleichförmig ausbildet. Obwohl nur eine einlagige Heizmatte verwendet wird, kommt es nicht nur zu einer Schweißverbindung im Berührungsbereich zwischen der Lascheninnenfläche und dem Umfang des Leitungsrohres, sondern auch im äußeren Berührungsbereich zwischen der Laschenaußenfläche und der Tascheninnenwand. Man erhält dadurch also bei geringem Bauaufwand auch in jenen Bereichen der Segmente eine einwandfreie Schweißverbindung, in welchen sich keine Heizmatte befindet, nämlich im Bereich der Taschen, wo die Heizmatte Lücken besitzt.

Die geringen Laschendicken erzeugen eine gute radiale Elastizität für eine Ausweichbewegung der Laschen beim Aufstecken der Segmente auf das Leitungsrohr. Dies gilt insbesondere bei zweischaligen Schellen, wo die beiden Segmente, im Querschnitt gesehen, ein Halbkreisprofil haben, das von den Laschen überragt wird. Die geringe Laschendicke erfordert eine schonende Behandlung der Laschen, die insbesondere bei der Lagerung und beim Transport der Schellen gefordert ist.

Um eine Elastizitätsgrenze überschreitende Deformation der Laschen und einen Bruch des in ihr integrierten Heizmatten-Lappens zu verhindern, wird ergänzend vorgeschlagen, an den längsseitigen Flanschen der Segmente Schutzzapfen sich erheben zu lassen, die eine gegenüber den Laschen größere Länge aufweisen. Wenn man die Segmente auf einer Unterlage abstützt, dann stützen sich diese an den Enden der Schutzzapfen ab, während die Lasche nicht mit der Unterlage in Berührung kommt und daher auch nicht deformiert werden kann. Durch eine mehrfache Anordnung der Schutzzapfen erhält man einen die herausragende Lasche bzw. die Laschen umschließenden "Korb", der auch beim Aufprall eines fallen gelassenen Segments auf den Boden der Laschen vor Beschädigung schützt.

Vorteilhaft ist es, diese Schutzzapfen zugleich zur Führung bei der Montage der Segmente zu verwenden, indem man sie in konforme Bohrungen im Gegenflansch des benachbarten Segments eindringen lässt. So erhält man bei der Montage der Segmente zugleich eine ideale Führung.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Die dort gezeigten Laschen und Taschen können in beliebiger Anzahl vorgesehen sein. Es zeigen:
- Fig. 1: die Stirnansicht eines Segments einer erfindungsgemäßen, zweischaligen Schelle, bei dessen Lagerung vor Gebrauch,
- Fig. 2: im Querschnitt und im Ausbruch, die beiden Segmente der erfindungsgemäßen Schelle vor ihrer Montage an einem Leitungsrohr, wobei die Lage der Schnittführung aus der perspektivischen Ansicht des unteren Segments in Fig. 7 durch die dortige Schnittlinie II - II zu erkennen ist,
- Fig. 3,: in einer der Fig. 2 entsprechenden Schnittdarstellung, die Segmente der Schelle nach ihrer Befestigung an dem Leitungsrohr, wobei die Schnittführung anhand des in Fig. 7 gezeigten unteren Segments durch die dortige, mittige Schnittlinie III - III verdeutlicht ist,
- Fig. 4,: wiederum in einer mit Fig. 3 analogen Darstellung, den Querschnitt durch die beiden am Leitungsrohr befestigten Segmente, wobei die Schnittführung anhand des in Fig. 7 gezeigten unteren Segments längs der dortigen Schnittlinie IV - IV erfolgt,
- Fig. 5: eine weitere Querschnittsansicht analog zu Fig. 3 bzw. 4, wobei allerdings die Schnittlinie an der mit V - V gekennzeichneten Stelle im unteren Segment von Fig. 7 liegt,
- Fig. 6: ein vergrößertes Detail von Fig. 5 nach Beendigung des Schweißvorgangs,
- Fig. 7: die perspektivische Ansicht des bereits mehrfach erwähnten unteren Segments von Fig. 1, in Blickrichtung auf die konkave Segment-Innenfläche,
- Fig. 8: die ebene Abwicklung der an der konkaven Innenfläche der Segmente von Fig. 1 bis 7 angeordneten Heizmatte, woraus sowohl ihr besonderes Umrissprofil als auch der Windungsverlauf des zu ihrem Aufbau dienlichen elektrischen Leiters erkennbar sind, und
- Fig. 9: in starker Vergrößerung, einen Eckbereich der in Fig. 7 gezeigten einen Lasche mit dem darin integrierten Lappen der in Fig. 8 gezeigten Heizmatte.

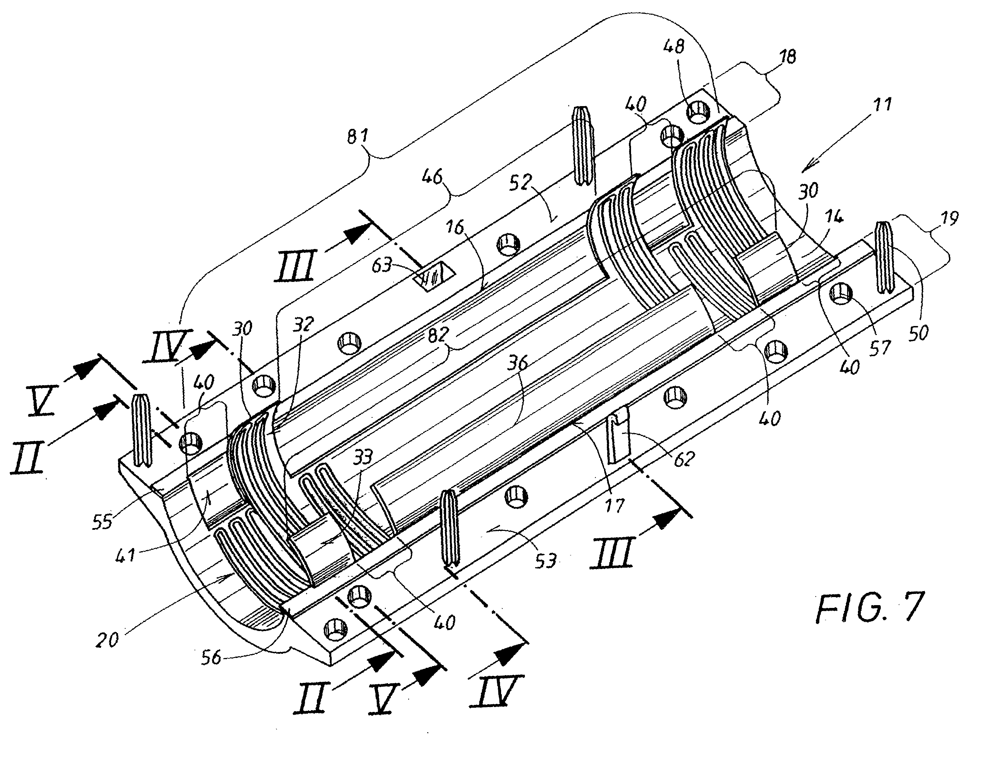

Die Schelle besteht aus zwei zylindrischen Segmenten 11, 12, die im Gebrauchsfall an der gewünschten Stelle eines Leitungsrohres 10 durch Schweißen befestigt werden. Das eine Segment 12 besitzt einen Rohrabgang 13. Ein solcher Rohrabgang 13 könnte auch fehlen oder es könnten an beiden Segmenten 11, 12 derartige Rohrabgänge 13 vorgesehen sein. Die beiden Segmente 11, 12 sind zueinander formgleich ausgebildet, weshalb es genügt, den besonderen Aufbau anhand des einen Segments 11 von Fig. 7 näher zu beschreiben. Jedes Segment 11 bzw. 12 ist von zwei Begrenzungskanten 16, 17 eingeschlossen, an denen längsverlaufende radial abgehende Flansche 18, 19 sitzen. Jede der beiden Begrenzungskanten 16, 17 werden stellenweise von schmalen Laschen 30 in den Endbereichen der beiden Segmente 11, 12 und einer breiten Lasche 36 im mittleren Bereich des Segments überragt. Im Wechsel mit diesen Laschen 30, 36 sind entsprechend dimensionierte Taschen 40, 46 angeordnet, welche in analoger Weise die Begrenzungskanten 16, 17 der beiden Segmente 11, 12 unterschreiten. Entsprechend den Abmessungen der beiden Laschen 30, 36 sind die Taschen 40, 46 dimensioniert. Dadurch entstehen an den beiden Begrenzungskanten 16, 17 zueinander komplementäre Zahnungsprofile 81, 82.

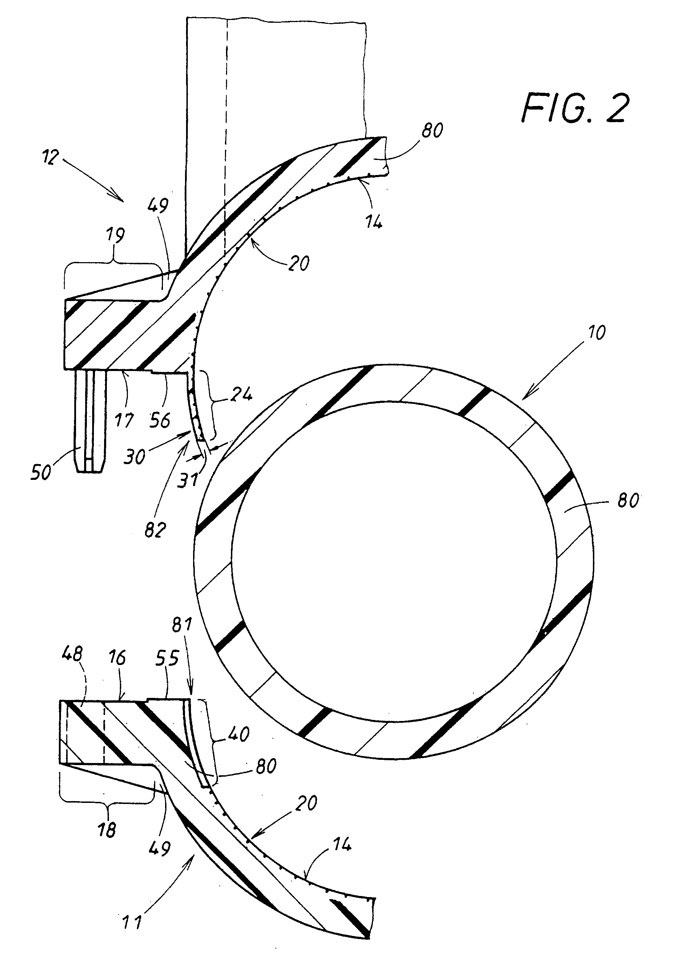

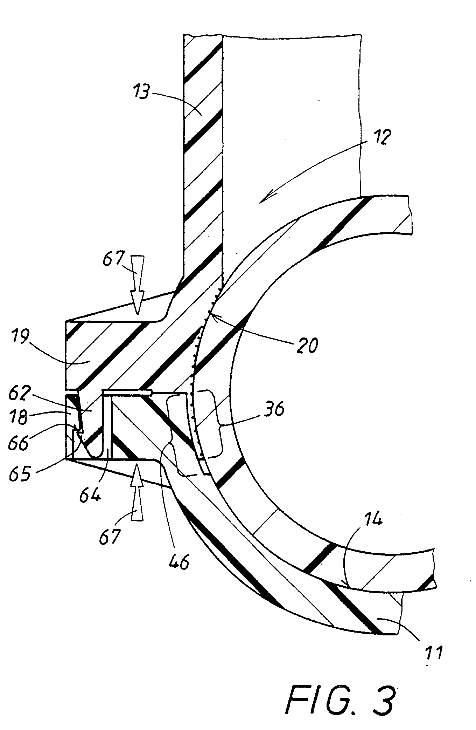

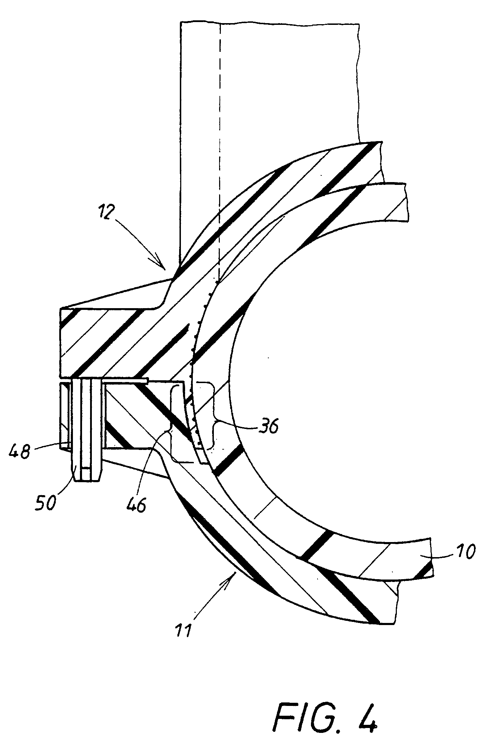

Wenn die beiden Segmente 11, 12 in der aus Fig. 2 ersichtlichen spiegelbildlichen Weise benutzt werden, liegen im Gebrauchsfall die beiden Begrenzungskanten 16, 17 einander gegenüber, weshalb jeweils komplementäre Zahnungsprofile 81, 82 miteinander zusammenwirken können, wie im Befestigungsfall von Fig. 3 bis 5 gezeigt ist. Im Gebrauchsfall greifen die Laschen 30, 36 der beiden Zahnungen 81, 82 der beiden Segmente 11, 12 wechselseitig in die ihnen jeweils zugeordneten Taschen 40, 46 ein. Dies ist anhand der diversen Querschnitte entlang der Schnittlinien II, III, IV und V von Fig. 7 zu erkennen, die weitere Details zeigen.

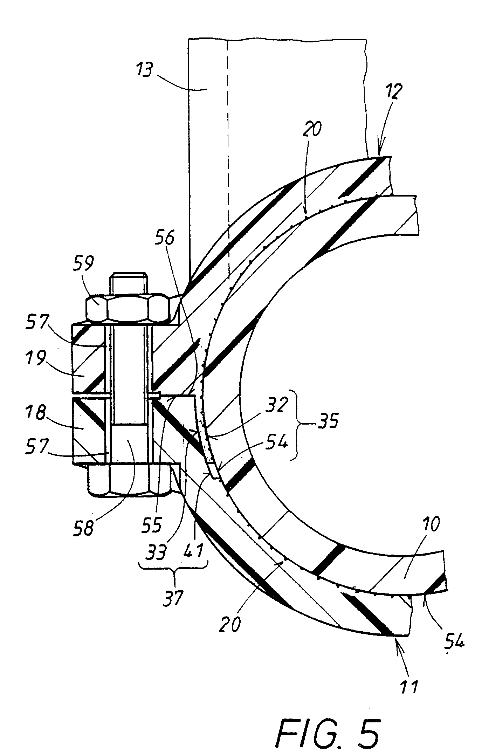

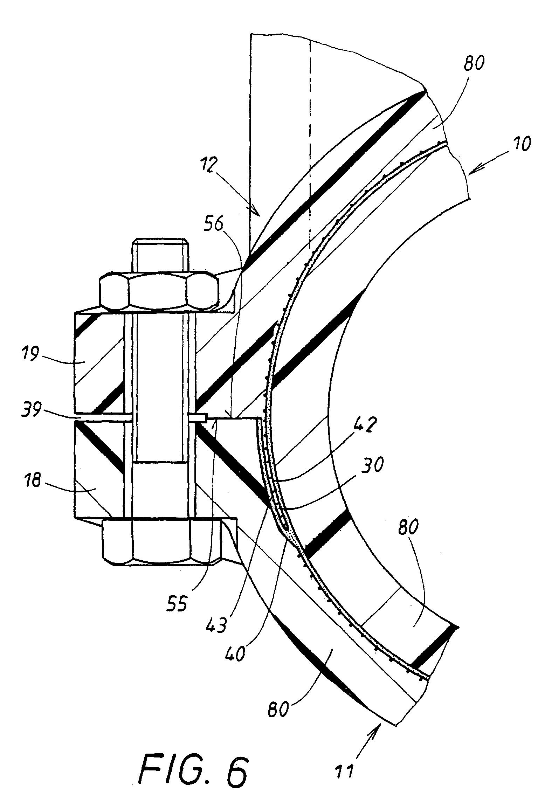

Im Gebrauchsfall werden die Flansche 18, 19 paarweise zusammengehalten. Im Endbefestigungszustand, gemäß Fig. 5, dienen als Befestigungselemente jeweils Bolzen 58 und Muttern 59. Wie am besten aus Fig. 7 zu erkennen ist, befinden sich an den beiden Innenflächen 52, 53 der beiden Flansche 18, 19 Anschlagelemente in Form von axialen Anschlagleisten 55, 56, welche radial neben den die Innenflächen überragenden Laschen 30, 36 und den Öffnungen der Taschen 40, 46 angeordnet sind. Im Befestigungsfall, gemäß Fig. 5, stützen sich die beiden Anschlagleisten 55, 56 aneinander ab. Wegen der durch die Befestigungselemente 58, 59 gegeneinander gepreßten Segmente 11, 12 kommt hier eine Dichtung zustande, welche für das im Zusammenhang mit Fig. 6 noch näher zu beschreibende Schweißverfahren bedeutsam ist.

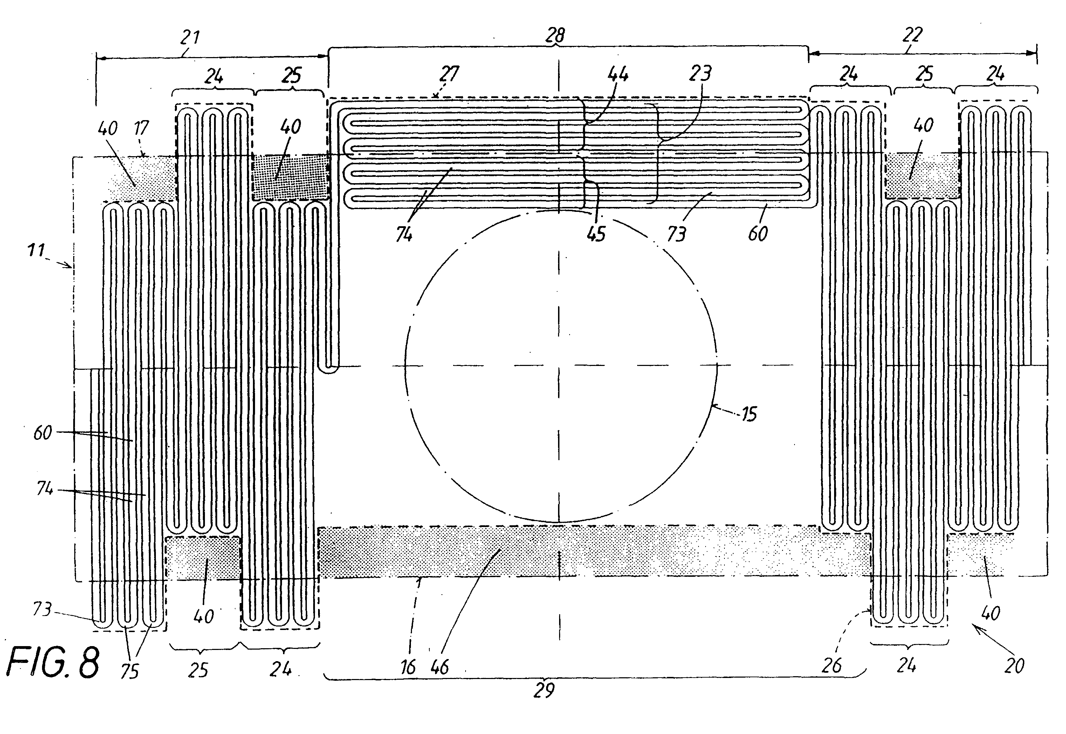

In die jeweiligen konkaven Innenflächen 14 der beiden Segmente 11, 12 ist eine Heizmatte 20 integriert, deren ebene Abwicklung in Fig. 8 dargestellt ist. In Fig. 8 sind strichpunktiert die Umrisse des Segments 11 und die Lage der Längskanten 16, 17, ebenfalls in die Ebene abgewickelt, verdeutlicht. Die Besonderheit der Heizmatte 20 besteht darin, daß sie entlang dieser Begrenzungskanten 16, 17 ein gegliedertes Umrißprofil 26, 27 aufweist, welches durch Strichelungen in Fig. 8 hervorgehoben wurde. Das Umrißprofil 26 ist zum Umrißprofil 27 komplementär ausgebildet. Es entstehen schmale Lappen 24 und breite Lappen 28, welche die beiden Begrenzungskanten 16, 17 überragen und dazwischenliegende schmale Lücken 25 und breite Lücken 29, welche die beiden Begrenzungskanten 16, 17 unterragen. In der Heizmatte 20 ist ein noch näher zu beschreibender Leitungsstrang 60 in Windungen verlegt, dessen Verlauf aus Fig. 8 zu erkennen ist. Dieser Windungsverlauf des Heizstrangs 60 wird durch eine Kunststoffschicht fixiert und dieses Vorprodukt dann bei Spritzgußherstellung des Endprodukts an der Innenfläche der zur Ausbildung der Segmente 11 bzw. 12 dienenden Spritzgußform angeordnet. Beide Segmente 11, 12 bestehen nämlich aus schweißfähigem Material 80, was auch für das Leitungsrohr 10 gilt. Dadurch kommen die Lappen 24, 28 in der Heizmatte 20 im Bereich der Laschen 30, 36 zu liegen, während die Lücken 25, 29 im Bereich der entsprechend dimensionierten Taschen 40, 46 angeordnet sind. Die Lage der Taschen 40, 46 ist in Fig. 8 durch Punktschraffur veranschaulicht.

Wenn die mit solchen Heizmatten 20 ausgerüsteten Segmente 11, 12 um das Leitungsrohr 10 gemäß Fig. 3 herumgelegt sind, entstehen wegen des aus Fig. 8 ersichtlichen Windungsverlaufs in den Endabschnitten 21, 22 ringförmig geschlossene Heizmanschetten, die durch zwei längsverlaufende Heizstreifen 23 verbunden sind. Diese Heizmanschetten und Heizstreifen 23 werden von einem entsprechenden Windungsverlauf des Heizstrangs 60 gebildet. Diese Heizstreifen 23 erstrecken sich im Montagefall mit ihrer einen Streifenhälfte 44 in die aus Fig. 7 erkennbare breite Lasche 36 des jeweiligen Segments 11 bzw. 12 hinein, während ihre andere Streifenhälfte 45 jeweils unterhalb der Begrenzungskante 17 zu liegen kommt. Diese Anordnung erfolgt, um die mittlere Zone für die strichpunktiert in Fig. 8 angedeutete Durchlassöffnung 15 des Rohrabgangs 13 freizuhalten.

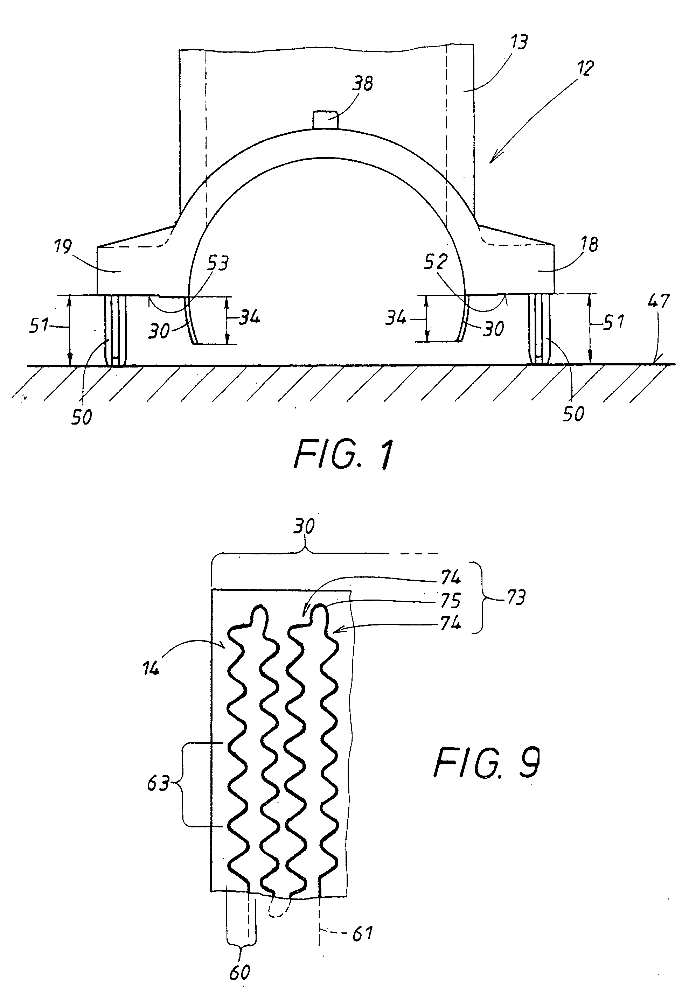

In Fig. 2 ist die an der Innenfläche 14 angeordnete Heizmatte 20 einfach durch die punktförmigen Querschnitte des in Fig. 9 noch näher zu beschreibenden elektrischen Leiters 61 angedeutet. Wie bereits erwähnt wurde, kommt dabei der Heizmatten-Lappen 24 im Inneren der jeweiligen Lasche 30 zu liegen. Die Laschen haben eine verhältnismäßig geringe Laschendicke 31. Im vorliegenden Ausführungsbeispiel ist eine gleichförmige Laschendicke 31 über die ganze, aus Fig. 1 erkennbare Laschenlänge 34 gegeben. Entsprechendes gilt auch für die oben beschriebene breite Lasche 36. Im Gebrauchsfall, bei gemäß Fig. 5 am Leitungsrohr 10 fertig montierten Segmenten 11, 12 ergeben sich bei der Lasche 30 bzw. 36 zwei Berührungszonen 35, 37. Die Innenberührungszone 35 entsteht durch Flächenkontakt zwischen der Lascheninnenfläche 32 und der Umfangsfläche 54 des Leitungsrohres 10. Die Außenberührungszone 37 wird durch Kontakt zwischen der Laschenaußenfläche 33 und der Tascheninnenwand 41 erzeugt, deren Lage auch in Fig. 7 angedeutet ist.

Die erwähnten elektrischen Leiter 61 der in jedes Segment 11, 12 integrierten Heizmatte 20 haben elektrische Kontakte 38 im Bereich der Segmentenden, was in Fig. 1 zu erkennen ist. An diese elektrischen Kontakte 38 wird eine Stromquelle angeschlossen, die zur elektrischen Erwärmung der Heizmatten 20 führt. Wegen der wenigstens stellenweise geringen Laschendicke 31 werden die vorerwähnten, miteinander kontaktierten Flächen nicht nur an der Innenberührungszone 37 verflüssigt. Das weich gewordene Material 80 zwischen den Segmenten 11, 12 und dem Leitungsrohr 10 entsteht, wie Fig. 6 durch Punktschraffur verdeutlicht, beidseitig der in die Tasche 40 eingreifenden Lasche 30. Das Material 80 fließt hier ineinander und nach dem Erkalten kommt es beidseitig der Lasche 30 zu einer inneren und einer äußeren Schweißverbindung 42, 43. Die durch die Befestigungselemente 58, 59 fest gegeneinander gedrückten Anschlagleisten 55, 56 verhindern ein Ausströmen der flüssigen Massen in die Fuge 39 zwischen den beiden Flanschen 18, 19.

Fig. 9 zeigt in Vergrößerung einen Eckbereich einer Lasche 30, in Draufsicht auf die Innenfläche 14 des betreffenden Segments 11 bzw. 12. Hier sind die näheren Details des in den vorausgehenden Fig. nur schematisch angedeuteten Heizstrangs 60 gezeigt. Der Heizstrang 60 besteht aus einem wellenlinienförmigen, ebenen Verlauf eines Heizleiters 61. Dieser ebene Wellenlinienverlauf 63 läßt sich als "Mäander" bezeichnen. Was vorausgehend mit "Heizstrang" bezeichnet wurde, ist also ein mäanderförmig gewundener Leiter 61. Der so gebildete Heizstrang 60 wird nun seinerseits, wie in Fig. 8 vereinfacht dargestellt ist, in engen Windungen 73 verlegt. Dabei ergeben sich parallele Schenkel 74 mit dazwischen liegenden Wendestellen 75.

Wie am besten aus Fig. 1 und Fig. 7 zu erkennen ist, befinden sich an beiden Flanschen 18, 19 mehrere Schutzzapfen 50, die sich über die erwähnten Flansch-Innenflächen 52, 53 erheben. Diese Schutzzapfen 50 haben eine größere Zapfenlänge 51, als der Vorsprungslänge 34 der kreisförmig gekrümmten Laschen 30 bzw. 36 entspricht. Stößt das Segment, wie Fig. 1 zeigt, gegen eine harte Fläche 47, so fangen die Stirnenden der Schutzzapfen 50 den Stoß auf. Es kommt zu keiner Deformation der Laschen 30 bzw. 36. Die Zapfen 50 erfüllen also eine Schutzfunktion und verhindern eine Beschädigung der herausragenden Laschen 30, 36. Wie bereits aus Fig. 2 und 7 zu erkennen ist, sind den. Schutzzapfen 50 in dem einen Flansch 19 des Segments 12 Bohrungen 48 im damit zusammenwirkenden Gegenflansch 18 des jeweils gegenüberliegenden Segments 11 zugeordnet, und zwar in einem der Lage der Zapfen 50 entsprechenden, komplementären Anordnungsmuster. Damit erlangen die Schutzzapfen 50 eine weitere Funktion, nämlich beim Zusammenbau der Segmente 11, 12 führungswirksam mit den Bohrungen 48 zusammenzuwirken. Es kommt zu einer wechselseitigen Zentrierung der beiden Segmente 11,' 12, die sicherstellen, daß die beidseitigen Laschen 30, 36 exakt in die ihnen zugeordneten Öffnungen der Taschen 40, 46 einfahren. Damit ist über die Schutzzapfen 50 auch ein exakter, eine Beschädigung der Laschen 30, 36 verhindernder Zusammenbau der Schelle sichergestellt.

Zur Erleichterung des Zusammenbaus besitzen die beiden Segmente 11, 12 zueinander komplementäre Schließelemente 62, 63, wie am besten aus Fig. 7 zu erkennen ist. Sie gehören zu einer Schnappverbindung, die beim Zusammenbau 11, 12 der beiden Segmente in Eingriff kommt und, wie Fig. 3 veranschaulicht, für eine vorläufige Befestigung der Segmente 11, 12 aneinander und am Leitungsrohr 10 sorgt. Das eine Schließelement 62 besteht aus einem Hakenglied 62 am einen Flansch 19, der sich, gemäß Fig. 7, über die Flanschinnenfläche 53 erhebt. Das komplementäre andere Schließelement 64, das in Fig. 7 am anderen Flansch 18 gezeigt ist, besteht aus einer Öffnung 64. Im Kupplungsfall, gemäß Fig. 3, greift das Hakenglied 62 mit seinem Hakenkopf 65 in die Öffnung 64 des Gegenflansches 18 ein und hintergreift einen in der Öffnung 64 vorgesehenen stufenförmigen Absatz 66. Die Dimensionen im Hakenglied 62 und im Absatzverlauf 66 der Öffnung 64 sind so bemessen, daß beim Einschnappen des Hakenkopfes 65 es zu einem durch Kraftpfeile 67 in Fig. 3 verdeutlichten Andruck zwischen den beiden Segmenten 11, 12 einerseits und den Segmentinnenflächen 14 am Leitungsrohr 10 andererseits kommt. Damit ist bereits durch einfache Schnappmontage ein Zusammenhalt der Bauteile 10, 11, 12 gewährleistet, bevor noch die erwähnten Befestigungselemente 58, 59 gesetzt oder gar betätigt werden.

Für das Setzen des Bolzens 58 sind, wie aus Fig. 5 und 7 hervorgeht, die beiden Flansche 18, 19 mit paarweise im Gebrauchsfall ausgerichteten Löchern 68 versehen. Beim Festziehen der Mutter 59 auf dem Bolzen 58 kommt es natürlich zu einer Erhöhung des vorbeschriebenen Andrucks zwischen den Bauteilen 10, 11, 12. Um die Steifigkeit der Flansche 18, 19 zu erhöhen, sind diese stellenweise mit radialen Versteifungsrippen 49 an den Flanschaußenflächen versehen.

### Bezugszeichenliste:

- 10: Leitungsrohr
- 11: unteres Segment
- 12: oberes Segment
- 13: Rohrabgang an 12
- 14: konkave Innenfläche von 11 bzw. 12
- 15: Durchlaßöffnung in 20 für 13
- 16: erste Begrenzungskante von 11, 12
- 17: zweite Begrenzungskante von 11, 12
- 18: erster Flansch bei 16
- 19: zweiter Flansch bei 17
- 20: Heizmatte für 14
- 21: erster Endabschnitt von 20
- 22: zweiter Endabschnitt von 20
- 23: Heizstreifen zwischen21, 22
- 24: schmaler Lappen von 20
- 25: schmale Lücke bei 20
- 26: erste Linie des Umrißprofils von 20
- 27: zweite Linie des Umrißprofils von 20
- 28: breiter Lappen von 20
- 29: breite Lücke in 20
- 30: schmale Lasche bei 24 von 11, 12
- 31: Laschendicke von 30 bzw. 36
- 32: Lascheninnenfläche
- 33: Laschenaußenfläche
- 34: Laschenlänge (Fig. 1)
- 35: Innenberührungszone von 30, 36 mit 41, 54
- 36: breite Lasche bei 28
- 37: Außenberührungszone von 30, 36 mit 41, 54
- 38: elektrische Kontaktstelle für 61 von 20 (Fig. 1)
- 39: Fuge zwischen 16, 17 (Fig. 6)
- 40: schmale Tasche von 11, 12 bei 25 von 20
- 41: Tascheninnenwand von 40 bzw. 46
- 42: innere Schweißverbindung von 30, 36 (Fig. 6)
- 43: äußere Schweißverbindung von 30, 36 (Fig. 6)
- 44: erste Streifenhälfte von 23
- 45: zweite Streifenhälfte von 23
- 46: breite Tasche in 11 bzw. 36 bei 29 von 20
- 47: harte Bodenfläche (Fig. 1)
- 48: Bohrung für 50
- 49: Versteifungsrippe bei 18, 19 (Fig. 2)
- 50: Schutzzapfen
- 51: Zapfenlänge von 50
- 52: Innenfläche von 18
- 53: Innenfläche von 19
- 54: Umfangsfläche von 10
- 55: Anschlagleiste an 18
- 56: Anschlagleiste an 19
- 57: Bohrung in 18, 19 (Fig. 5)
- 58: Befestigungselement, Bolzen
- 59: Befestigungselement, Mutter
- 60: Heizstrang in 20
- 61: elektrischer Leiter in 60
- 62: Schließelement an 19, Hakenglied (Fig. 3)
- 63: Mäander von 61 in 60, Wellenlinienverlauf von 61
- 64: komplementäres Schließelement, Öffnung in 18 für 62 (Fig. 3)
- 65: Hakenkopf von 62 (Fig. 3)
- 66: Absatz in 64 (Fig. 3)
- 67: Andruck-Kraftpfeil zwischen 18, 19 (Fig. 3)

- 73: Windung von 60
- 74: paralleler Schenkel von 73 (Fig. 8)
- 75: Wendestelle zwischen 74 (Fig. 8)

- 80: schweißfähiges Material von 10, 11 bzw. 12
- 81: Zahnungsprofil von 11 bzw. 12 bei 16
- 82: komplementäres Zahnungsprofil von 12, 11 bei 17

## Patentansprüche

1. Schelle aus thermisch schweißfähigem Material (80) für ein ebenfalls aus schweißfähigem Material (80) bestehendes Leitungsrohr (10), wie eine Reparatur-Schelle,
aus mindestens zwei das Leitungsrohr (10) im Gebrauchsfall umschließenden Segmenten (11, 12), von denen ggf. wenigstens eines (12) einen Rohrabgang (13) aufweist,
mit Heizmatten (20) aus elektrisch aufheizbaren Leitern (61), die an den Innenflächen (14) der Segmente (11, 12) integriert sind,
und mit im Gebrauchsfall einander zugekehrten Begrenzungskanten (16, 17) an den Segmenten (11, 12), die unter Druck aneinander befestigbar sind,
wobei an jeder der beiden Begrenzungskanten (16, 17) eines jeden Segments (11, 12) einerseits die Begrenzungskanten (16, 17) stellenweise überragende Laschen (30, 36) und andererseits zur Aufnahme der Laschen dienende, die Begrenzungskanten (16, 17) unterschreitende Taschen (40, 46) angeordnet sind,
und diese Laschen (30, 36) und Taschen (40, 46) an den beiden benachbarten Begrenzungskanten (16, 17) zweier im Gebrauchsfall nebeneinander liegender Segmente (11, 12) zueinander komplementäre Profile (81, 82) erzeugen,
und die Heizmatten (20) ein konformes Umrissprofil (26, 27) besitzen, bestehend aus vorspringenden Lappen (24, 28), die im Bereich der Laschen (30, 36) der Segmente (11, 12) integriert sind, und aus Lücken (25, 29) im Bereich der Tasche (40, 46) der Segmente (11, 12),
**dadurch gekennzeichnet ,**
**dass** die Lasche (30, 36) eine so geringe Laschendicke (31) gegenüber dem in sie integrierten Lappen (24, 28) der Heizmatte (20) aufweist,
**dass** im Gebrauchsfall beim Erhitzen das schweißfähige Material (80) nicht nur im Bereich der zwischen der Umfangsfläche (54) des Leitungsrohres (10) und der Lascheninnenfläche (32) entstehenden Innenberührungszone (35),
sondern auch im Bereich der zwischen der Laschenaußenfläche (33) und der Tascheninnenwand (41) des benachbarten Segments (12, 11) erzeugten Außenberührungszone (37) sich erweicht, ineinander fließt und, nach dem Erkalten, eine beidseitige Schweißverbindung (42, 43) der Lasche (30) erzeugt,
und **dass** die Lasche (30, 36) über ihre ganze Laschenlänge (34) eine gleichförmige Laschendicke (31) aufweist.

2. Schelle nach Anspruch 1 mit an den Begrenzungskanten (16, 17) ihrer Segmente (11, 12) sitzenden längsverlaufenden Flanschen (18, 19),
die im Gebrauchsfall paarweise, als Flansch (19) und Gegenflansch (18), zusammenwirken und an denen Befestigungselemente, wie Schrauben (58) und Muttern (59), zur Befestigung der Segmente (11, 12) aneinander und am Leitungsrohr (10) angreifen,
**dadurch gekennzeichnet ,**
**dass** aus der Innenfläche (52, 53) wenigstens einer der beiden Flansche (18, 19) mindestens ein Schutzzapfen (50) sich erhebt, dessen Zapfenlänge (51) größer/gleich der Vorsprungslänge (34) der diesen Flansch (18, 19) überragenden Lasche (30, 36) ausgebildet ist,
und **dass** diesem Schutzzapfen (50) eine konforme Bohrung (48) im Gegenflansch (19, 18) des benachbarten Segments (12, 11) zugeordnet ist, in welcher der Schutzzapfen (50) beim Zusammenstecken der Segmente (11, 12) zu einer das Leitungsrohr (10) umschließenden Schelle führungswirksam ist.

3. Schelle nach Anspruch 1 oder 2, **dadurch gekennzeichnet, dass** der Flansch (19) und Gegenflansch (18) benachbarter Segmente (11, 12) zueinander komplementäre Schließelemente (62, 64) einer Schnappverbindung besitzt,
die beim Zusammenstecken der Segmente (11, 12) ineinander schnappen und dann für eine zumindest vorläufige Befestigung der Segmente (11, 12) aneinander und am Leitungsrohr (10) sorgen.

4. Schelle nach Anspruch 3, **dadurch gekennzeichnet, dass** die ineinander geschnappten Schließelemente (62, 64) die Segmente (11, 12) gegen das Leitungsrohr (10) angedrückt halten.

5. Schelle nach Anspruch 3 oder 4, **dadurch gekennzeichnet, dass** das eine Schließelement der Schnappverbindung aus einem sich über den einen Flansch (19) erhebenden Hakenglied (62) besteht, während das komplementäre Schließelement aus einer Öffnung (63) im Gegenflansch (18) besteht, in welche der Hakenkopf (65) des Hakenglieds (62) im Verbindungsfall einschnappt.

6. Schelle nach Anspruch 5, **dadurch gekennzeichnet, dass** im Inneren der Öffnung (63) des Gegenflansches (18) ein durch einen gestuften Öffnungsquerschnitt erzeugter Absatz (66) angeordnet ist und der Absatz (66) im Verbindungsfall vom Hakenkopf (65) hintergriffen wird.

7. Schelle nach einem der Ansprüche 2 bis 6, **dadurch gekennzeichnet, dass** der Flansch (19) und Gegenflansch (18) an den im Gebrauchsfall einander zugekehrten Innenflächen (52, 53) vom Flansch (19) und Gegenflansch (18) Anschlagelemente (55, 56) besitzt, die im Befestigungsfall der Segmente (11, 12) sich aneinander abstützen.

8. Schelle nach Anspruch 7, **dadurch gekennzeichnet, dass** die Anschlagelemente aus einer axialen Anschlagleiste (55, 56) bestehen, welche radial zwischen den Innenflächen (52, 53) der beiden Flansche (18, 19) einerseits und den die Flansche überragenden Lasche (30, 36) bzw. unterschreitenden Tasche (40, 46) andererseits angeordnet sind.

9. Schelle nach einem der Ansprüche 1 bis 8, **dadurch gekennzeichnet, dass** die Lasche (30, 36), die Schutzzapfen (50), die Schließelemente (62, 64) der Schnappverbindung und/oder die Anschlagelemente (55, 56) einstückig mit dem jeweiligen Segment (11, 12) ausgebildet sind.

## Claims

1. A clamp made of thermally weldable material (80) for a conduit (10), also made of weldable material (80), such as a repair clamp,
comprising at least two segments (11, 12) enclosing the conduit (10) when in use, at least one (12) of said segments having a conduit branch (13),
with heating mats (20) made of electrically heatable conductors (61) which are integrated on the inner surfaces (14) of the segments (11, 12),
and with limiting edges (16, 17) facing each other when in use on the segments (11, 12), said edges being attachable to each other under pressure,
whereby on each of the two limiting edges (16, 17) of each segment (11, 12), cover plates (30, 36) protruding over the limiting edges (16, 17) at some locations are arranged on one side and pockets (40, 46) serving to receive the cover plates and undershooting the limiting edges (16, 17) are arranged on the other side,
and these cover plates (30, 36) and pockets (40, 46) generate profiles (81, 82) complementary to each other on the two adjacent limiting edges (16, 17) of two segments (11, 12) located beside each other when in use,
and the heating mats (20) have a conformal contour profile (26, 27) consisting of protruding tabs (24, 28), which are integrated in the area of the cover plates (30, 36) of the segments (11, 12), and of gaps (25, 29) in the area of the pocket (40, 46) of the segments (11, 12),
**characterised in that**
the cover plate (30, 36) has such a small thickness (31) compared with the tab (24, 28) integrated therein of the heating mat (20)
that, when in use, and on heating, the weldable material (80) softens not only in the area of the internal contact zone (35) generated between the circumferential surface (54) of the conduit (10) and the cover plate inner surface (32)
but also in the area of the outer contact zone (37) generated between the cover plate outer surface (33) and the pocket inner wall (41) of the adjacent segment (12, 11), flows together and, after becoming cold, produces a welded connection (42, 43) of the cover plate (30) on both sides,
and that the cover plate (30, 36) has a uniform thickness (31) over its entire length (34).

2. A clamp according to claim 1 with longitudinal flanges (18, 19) arranged on the limiting edges (16, 17) of its segments (11, 12),
said flanges, when in use, act together in pairs, as a flange (19) and mating flange (18), and on which attachment elements, such as bolts (58) and nuts (59), engage each other and the conduit (10) to attach the segments (11, 12),
**characterised in that**
at least one protective pin (50) rises out of the inner surface (52, 53) of at least one of the two flanges (18, 19), the length (51) of said protective pin being designed to be greater than/equal to the protrusion length (34) of the cover plate (30, 36) projecting over this flange (18, 19),
and that this protective pin (50) has a conformal bore (48) in the mating flange (19, 18) of the adjacent segment (12, 11) and in said bore the protective pin (50) acts as a guide when the segments (11, 12) are plugged together to form a clamp enclosing the conduit (10).

3. A clamp according to claim 1 or 2, **characterised in that** the flange (19) and mating flange (18) of adjacent segments (11, 12) have complementary closing elements (62, 64) of a snap connection,
said elements snapping into each other when the segments (11, 12) are plugged together and then ensuring at least provisional attachment of the segments (11, 12) to each other and to the conduit (10).

4. A clamp according to claim 3, **characterised in that** the closing elements (62, 64) snapped into each other hold the segments (11, 12) pressed against the conduit (10).

5. A clamp according to claim 3 or 4, **characterised in that** the one closing element of the snap connection consists of a hook element (62) rising above the one flange (19) whereas the complementary closing element consists of an opening (63) in the mating flange (18) into which the hook head (65) of the hook element (62) snaps in the event of connection.

6. A clamp according to claim 5, **characterised in that** a collar (66) produced by a stepped opening cross section is arranged in the inside of the opening (63) of the mating flange (18) and the collar (66) is gripped from behind by the hook head (65) in the event of connection.

7. A clamp according to one of claims 2 to 6, **characterised in that** the flange (19) and mating flange (18) have stop elements (55, 56) on the inner surfaces (52, 53) of the flange (19) and mating flange (18) facing each other in the event of use, said elements resting on each other when the segments (11, 12) are attached.

8. A clamp according to claim 7, **characterised in that** the stop elements consist of axial stop strips (55, 56) which are radially located between the inner surfaces (52, 53) of the two flanges (18, 19), on the one side, and the cover plates (30, 36) protruding over the flanges or the pockets (40, 46) undershooting them, on the other side.

9. A clamp according to one of the claims 1 to 8, **characterised in that** the cover plates (30, 36), the protective pins (50), the closing elements (62, 64) of the snap connection and/or the stop elements (55, 56) are formed in one piece with the respective segment (11, 12).

## Revendications

1. Bride de fixation en matériau soudable (80) pour une conduite (10) constituée d'un matériau également soudable (80), telle qu'une bride de fixation de réparation, comprenant :
- au moins deux segments (11, 12) fermant la conduite (10) en cas de besoin, au moins un (12) de ces segments le cas échéant présentant une évacuation de tube (13),
- des couvertures électriques (20) composées de conducteurs chauffants électriques (61), qui sont intégrés sur la surface intérieure (14) des segments (11, 12),
- et avec des bords de délimitation (16, 17) des segments (11, 12) opposés l'un à l'autre en cas de besoin, qui sont susceptibles d'être fixés l'un à l'autre sous pression, sur laquelle, sur chacun des deux bords de délimitation (16, 17) de chacun des segments (11, 12) sont disposés, d'une part, au moins un collier de fixation (30, 36) en saillie positionnant les bords de délimitation (16, 17), et d'autre part, une poche (40, 46) en retrait par rapport aux bords de délimitation (16, 17) servant à loger le collier de fixation,
- et ce collier de fixation (30, 36) et la poche (40, 46) génèrent au niveau des deux bords de délimitation voisins (16, 17) des seconds profils (81, 82) complémentaires l'un de l'autre, situés à côté de segments (11, 12) en cas de besoin
- et les couvertures électriques (20) comportent un profil de contour conforme (26, 27) constitué de pattes en saillie (24, 28) qui sont intégrées aux segments (11, 12) dans la zone du collier de fixation (30, 36) et d'évidements (25, 29) dans la zone de la poche (40, 46) des segments (11, 12),
**caractérisée en ce que**
- le collier de fixation (30, 36) présente au moins localement une épaisseur (31) de collier de fixation si fine par rapport aux pattes (24, 28) de la couverture électrique (20) et qui s'intègrent dans le collier,
- que, en cas de besoin lors d'un réchauffement, le matériau soudable (80) ne se ramollit non seulement dans la zone de surface de contact intérieure (35) entre la surface périphérique (54) de la conduite (10) et la surface intérieure du collier de fixation (32), mais se ramollit également dans la zone de la surface de contact extérieure (37) générée entre la surface extérieure du collier de fixation (33) et la paroi intérieure de la poche (41) des segments voisins (12 et 11), et ce mélange, après refroidissement, génère une liaison par soudage (42, 43) bilatérale du collier de fixation (30),
- et **en ce que** le collier de fixation (30, 36) présente sur l'intégralité de la longueur (34) de collier une épaisseur de collier (31) similaire.

2. Bride de fixation selon la revendication 1, avec des brides (18, 19) s'étendant sur toute la longueur au niveau des bords de délimitation (16, 17) de ses segments (11, 12),
- qui agissent par paire en cas de besoin, en tant que brides (19) et contre-brides (18) et auxquelles des éléments de fixation, tels que des vis (58) et des écrous (59) sont appliqués pour la fixation des segments (11, 12) l'un à l'autre et à la conduite 10,
**caractérisée en ce que**
- au moins un tenon de protection (50) fait saillie depuis la face intérieure (52,53) d'au moins une des deux brides (18, 19), dont la longueur de tenon (51); supérieure ou égale à la longueur de saillie (34) du collier de fixation( 30, 36) est en saillie depuis ces brides (18, 19), et **en ce que**
- un alésage (48) conformé à ce tenon de protection (50) est réalisé dans la contre-bride (19, 18) du segment voisin (12, 11) dans lequel le tenon de protection (50) amène à une bride de fixation entourant la conduite (10) lors d'un enfichage des segments (11, 12).

3. Bride de fixation selon la revendication 1 ou 2, **caractérisée en ce que** la bride (19) et la contre-bride (18) de segments voisins (11, 12) comportent des éléments de fermeture complémentaires l'un avec l'autre (62, 64) d'un assemblage à enclenchement, qui, lors de l'enfichage des segments (11, 12) s'enclenchent l'un dans l'autre et ensuite assurent une retenue au moins préliminaire des segments (11, 12) l'un avec l'autre et avec la conduite (10).

4. Bride de fixation selon la revendication 3, **caractérisée en ce que** les éléments de fermeture (62, 64) s'enclenchant l'un dans l'autre maintiennent pressés les segments (11, 12) contre la conduite (10).

5. Bride de fixation selon la revendication 3 ou 4, **caractérisée en ce que** l'un des éléments de fermeture de l'assemblage à enclenchement est constitué d'un crochet (62) faisant saillie depuis la bride (19), alors que l'élément de fermeture complémentaire est constitué d'une ouverture (63) dans la contre-bride (18), dans laquelle la tête de crochet (65) du crochet (62) s'enclenche en position de liaison.

6. Bride de fixation selon la revendication 5, **caractérisée en ce que**, à l'intérieur de l'ouverture (63) de la contre-bride (18) est disposé un retrait (66) généré par une découpe d'ouverture en gradins et le retrait (66) est accroché en position de liaison par la tête de crochet (65).

7. Bride de fixation selon l'une quelconque des revendications 2 à 6, **caractérisée en ce que** la bride (19) et la contre-bride (18) présentant en cas de besoin des éléments de butée (55, 56) sur la surface intérieure adjacente (52, 53) de la bride (19) et de la contre-bride (18), qui se repoussent mutuellement en position de fixation des segments (11, 12).

8. Bride de fixation selon la revendication 7, **caractérisée en ce que**, les éléments de butée sont constitués d'un battement axial (55, 56), qui est disposé d'une part radialement entre les surfaces intérieures (52, 53) des deux brides (18, 19) et disposé d'autre part au niveau du collier de fixation (30, 36) en saillie sur les brides et le cas échéant de la poche en retrait (40, 46).

9. Bride de fixation selon l'une quelconque des revendications 1 à 8, **caractérisée en ce que** le collier de fixation (30, 36), le tenon de protection (50), les éléments de fermeture (62, 64) de la liaison par enclenchement et/ou les éléments de butée (55, 56) sont formés monobloc avec chaque segment (11, 12).
